# EUROPEAN PATENT SPECIFICATION

(11) **EP 2 828 116 B1**
(45) Date of publication and mention of the grant of the patent: **31.05.2017**
(21) Application number: 13715470.4
(22) Date of filing: 14.03.2013
(51) Int. Cl.: B60L 5/38, B60M 7/00, B60K 1/04

(54) **ADD-ON MOTOR ASSEMBLY**
ANORDNUNG EINES ZUSATZANTRIEBS
ENSEMBLE DE MOTEUR SUPPLÉMENTAIRE

(30) Priority: 19.03.2012 SE 1250258
(43) Date of publication of application: 28.01.2015
(73) Proprietor: Elways AB, 171 60 Solna (SE)
(72) Inventor: ASPLUND, Gunnar, S-171 60 Solna (SE)
(74) Representative: Groth & Co. KB
(86) International application number: PCT/SE2013/050245
(87) International publication number: WO 2013/141782

(56) References cited:
- EP-A1- 1 582 396
- CN-U- 201 872 622
- GB-A- 2 071 032
- GB-A- 2 474 100

## Description

The present invention relates to an add-on motor assembly adapted to be connected to an existing vehicle and configured to supply additional vehicle propulsion, comprising at least one electric motor. In a second aspect, the present invention relates to a vehicle comprising such an add-on motor assembly. In a third aspect, the present invention relates to a method of adapting an existing vehicle to utilise supplied voltage from an electric conductor located in a road section, on which the vehicle is travelling, in order to propel the vehicle.

### Technical background of the invention

Concerns about the environmental impact of combustion of fossil fuels have lead to an increased interest in electric vehicles, which have several potential benefits compared to vehicles with conventional internal combustion engines, including: a significant reduction of urban air pollution, as they do not emit harmful tailpipe pollutants from the onboard source of power at the point of operation; reduced greenhouse gas emissions from the onboard source of power, depending on the fuel and technology used for electricity generation and/or charging the batteries and reduced dependency on fossil fuels with increasingly variable supply and fluctuating prices.

However, there are factors which discourage consumers from making the switch to electric vehicles. As of 2012, electric vehicles are significantly more expensive than conventional internal combustion engine vehicles and hybrid electric vehicles due to the additional cost of their lithium-ion battery pack. Another hurdle to overcome is the limited range of existing electric vehicles due to limitations in battery capacity. An alternative for overcoming the limited range of conventional internal combustion engine vehicles is disclosed in GB 2,071,032, which shows an add-on motor assembly according to the preamble of claim 1. WO 2010/140964 proposes one solution to the latter problem by feeding electric vehicles while driving. It discloses a system for electric propulsion of a vehicle along a road comprising electric conductors in the shape of energisable conducting rails located in longitudinal tracks or channels in the road. The vehicle is equipped with a current collector which during contact with the conducting rail allows for transfer of electric current between the conducting rail and the vehicle.

The stretch of road carrying the conductor conducting rails is divided into electrically separated road sections oriented in series, whereby the conductor conducting rails are only energised when a vehicle with its current collector passes the relevant road section.

One drawback with this solution is that consumers will not buy electric vehicles adapted to the system of WO 2010/140964 before a substantial part of the roads are electrified. This creates a chicken and egg situation because it will be difficult to finance electrification of roads if there are not enough vehicles utilising them.

Therefore, there is a need to develop low cost alternatives enabling existing vehicles to utilise electrified roads.

### Summary of the invention

The purpose of the present invention is to provide low cost alternatives enabling existing vehicles to utilise electrified roads.

This is achieved by an add-on motor assembly according to claim 1.

According to the present invention, there is provided an add-on motor assembly adapted to be connected to an existing vehicle and configured to propel the vehicle along a road. The vehicle may be any motor or road vehicle, i.e. suitable for road transportation, including, but not limited to, cars, buses, trucks, lorries and motorcycles. In the context of the present invention, the term 'add-on' is to be interpreted as referring to an external component not forming part of the vehicle as manufactured.

The add-on motor assembly of the present invention is adapted to be connected, attached, installed our mounted on or to an existing vehicle in such a way that the add-on motor assembly will provide propulsion to the vehicle, either supplementing or replacing the propulsion provided by the existing vehicle engine as the vehicle travels on a an electrified road section, e.g. by the system of WO 2010/140964.

The add-on motor assembly comprises at least one electric motor, and further contact means displaceable upwards, downwards and laterally and including a current collector, and a mechanism for displacing the contact means. One example of a contact means is given in WO 2011/123047. The contact means is adapted to co-act mechanically and electrically with an electric conductor put under voltage and located in a road section on which the vehicle is travelling, in order to supply electric voltage to the at least one electric motor which thereby propels the vehicle.

Hence, the present invention solves the above problem by enabling a large number of vehicles to utilise electrified roads, without requiring the consumers to replace their existing fuel or hybrid vehicles.

In a preferred embodiment, the mechanism comprises a longitudinal arm having a first end section rotatably attached to a side of the add-on motor assembly facing the road section and a second end section adapted to carry the contact means. Such a mechanism is described in WO 2011/123048. The mechanism is able to sense the presence of an electrified road section and will only then bring the contact means into mechanical and electric contact with the electric conductors, as described in WO 2011/123052.

In an alternative embodiment, the add-on motor assembly comprises a cart adapted to be connected to the vehicle and wherein the at least one electric motor is configured to drive at least one wheel of the cart to propel the cart and thereby propel the vehicle. Preferably, the cart is connected to the rear of the vehicle to thereby push the vehicle forward by virtue of the forward propulsion supplied by the driving wheel of the cart. More preferably, the add-on motor assembly comprises one or more electric motors, each configured to drive one or more wheels of the cart. For instance, the cart could have one, two, four, six, eight or more wheels, each driven by a separate electric motor or one common electric motor, or a combination of both.

In a further preferred embodiment, the wheels of the cart are smaller than at least one of the wheels of the vehicle. Preferably, at least one wheel axle of the cart has a width smaller than the width of at least one of the wheel axles of the vehicle. As such, the cart will be smaller than the vehicle intended to be propelled and therefore not obscure the driver's sight or hinder movement of the vehicle when turning.

In an advantageous embodiment, the weight of the cart is adapted such that required pressure on the at least one driving wheel of the cart is achieved in order to propel the vehicle.

In another alternative embodiment, the connection between the vehicle and the cart is configured in such a way that required pressure on the at least one driving wheel of the cart is transferred from the weight of the vehicle to the at least one driving wheel in order to propel the vehicle.

In a preferred embodiment, the add-on motor assembly is adapted to be releasably attached to the vehicle. Preferably, the at least one electric motor is a wheel hub motor. More preferably, the add-on motor assembly comprises one or more wheel hub motors, each configured to drive one wheel of the vehicle. For instance, the vehicle could have one, two, four, six, eight or more wheels, each driven by a separate wheel hub motor.

By attaching the add-on motor assembly directly to the vehicle, a more compact solution is achieved, which does not affect the manoeuvring and driving characteristics of the vehicle and is more aesthetically pleasing to consumers, who for different reasons do not wish to connect a cart to their vehicle.

The add-on motor assembly is configured to be releasably attached to the vehicle, either externally, e.g. at the rear end of or underneath the vehicle, or internally, e.g. under the bonnet or hood of the vehicle. Any location on or in the vehicle, from which the contact means may be brought into contact with the conducting rail is deemed suitable.

In a further embodiment, the add-on motor assembly further comprises one or more batteries, and a charger. The electric energy supplied to the add-on motor assembly from the conducting rail may then be stored and used to propel the vehicle along non-electrified road sections.

In an alternative embodiment, the add-on motor assembly further comprises a controller or control device configured to control the at least one electric motor and thereby control or regulate the propulsion provided to the vehicle. Preferably, the controller is mounted adjacent to the instrument panel of the vehicle within reach of the driver to allow the driver to control the add-on motor assembly and the at least one electric motor. The controller may comprise a manual actuation device in the shape of a foot pedal, a rotatable knob, one or more buttons, a lever or handle which facilitates operation and control of the add-on motor assembly to regulate the propulsion and thereby the velocity of the vehicle. The controller is configured to communicate with the motor drive system of the add-on motor assembly over a wire or wireless connection, as is known in the art.

In a second aspect of the present invention, there is provided a vehicle comprising an add-on motor assembly according to any of the preceding embodiments.

In a third aspect of the present invention, there is provided a method of adapting an existing vehicle to utilise supplied voltage from an electric conductor located in a road section, on which the vehicle is travelling, in order to propel the vehicle. The method comprises the steps:
- connecting an add-on motor assembly to the vehicle, the add-on motor assembly being configured to propel the vehicle and comprising at least one electric motor, a charger, contact means displaceable upwards, downwards and laterally and including a current collector, and a mechanism for displacing the contact means; and
- displacing the contact means upwards, downwards and/or laterally to bring the contact means into mechanical and electrical contact with the electric conductor in order to supply electric voltage to the at least one electric motor which thereby propels the vehicle.

### Brief description of the drawings

Figure 1 illustrates a side view of a first embodiment of an add-on motor assembly according to the present invention.
Figure 2 illustrates a side view of a first embodiment of an add-on motor assembly according to the present invention.
Figure 3 illustrates a rear view of a first embodiment of an add-on motor assembly according to the present invention.
Figure 4 illustrates a side view of a second embodiment of an add-on motor assembly according to the present invention.

### Detailed description of the invention

Preferred embodiments of an add-on motor assembly according to the present invention will now be described with reference to the attached drawings. The invention should not be considered to be limited to the embodiments shown in the attached drawings, but may be varied within the scope of the claims.

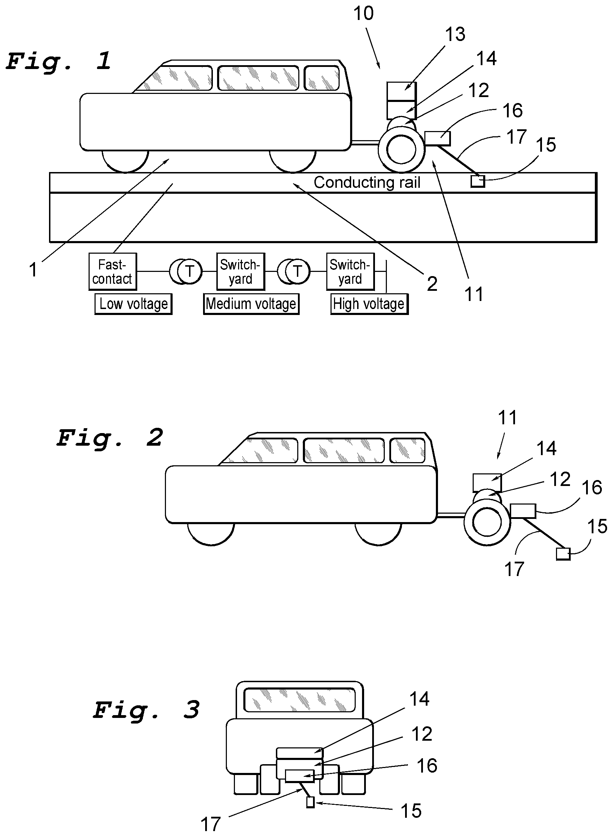

Figure 1 shows a schematic illustration of an electrified road section on which a vehicle 1 is travelling. An electric conductor 2 in the form of a conducting rail 2 is located in an elongated track in the road section. The conducting rail is energised, i.e. put under voltage, by means of connection to a source of electric voltage including switches and transformers. A control system controls activation of the voltage supply to the conducting rail, so that the road section is only electrified when one or more vehicles are travelling on the road section.

An add-on motor assembly 10 according to a first embodiment of the present invention is illustrated in figure 2 as a cart 11 which is connected to the rear end of the vehicle. It may also be contemplated to connect the cart 11 to the front end of the vehicle. The add-on motor assembly 10 comprises at least one electric motor 12. In addition, the add-on motor assembly 10 may further comprise one or more batteries 13 and a charger 14.

Further, the add-on motor assembly comprises a displaceable contact means 15 including a current collector. The contact means 15 may be displaced upwards, downwards and laterally, with respect to the add-on motor assembly 10, by a displacing mechanism 16. Preferably, the mechanism 16 comprises a longitudinal arm 17 having a first end section rotatably attached to the side of the add-on motor assembly 10 facing the road section. A second end section of the longitudinal arm 17 is adapted to carry the contact means 15 with the current collector.

The contact means 15 is adapted to be brought into contact with the conducting rail 2 and co-act mechanically and electrically with the latter in order to supply electric voltage from the conducting rail 2 to the electric motor 12. The electric motor 12 is in turn connected to at least one wheel of the cart 11 so as to drive the at least one wheel.

The propulsion provided to the cart 11 of the add-on motor assembly 10 by the at least one driving wheel is further imparted to the vehicle 1 via the connection between the add-on motor assembly 10 and the vehicle 1. In other words, the cart 11 will push the vehicle 1 forward. It is also contemplated to connect the cart 11 to the front end of the vehicle 1, and thereby pull the vehicle 1.

As seen from figure 3, the cart 11 may comprise two or more wheels distributed on at least one wheel axles (not shown). The size of the wheels of the cart 11 may be chosen smaller than at least one of the wheels of the vehicle 1. Also, the at least one wheel axle of the cart 11 may be chosen shorter than at least one wheel axle of the vehicle 1. Such a construction of the cart 11 will provide a cart 11 that is smaller than the vehicle 1 and therefore does not obscure the sight of the driver or hinder movement of the vehicle 1 in turns or roundabouts.

One way of achieving a required pressure on the at least one driving wheel of the cart 11 is to adapt the weight of the cart 11. Alternatively, the connection between the vehicle 1 and the cart 11 may be configured in such a way that part of the weight of the vehicle 1 is transferred to the cart 11 such that it applies the required pressure to the driving wheel of the cart 11 via a wheel axle (not shown) of the cart 11.

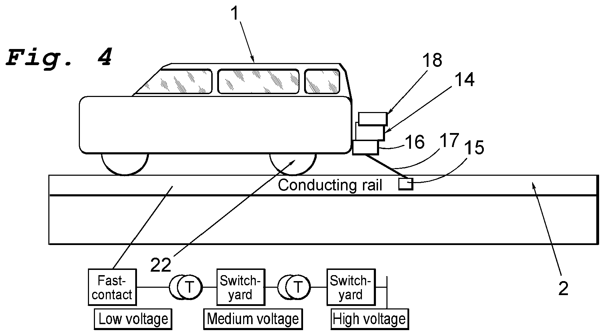

In figure 4, a second embodiment of an add-on motor assembly 20 according to the present invention is illustrated. Like the add-on motor assembly 10 according to the first embodiment, the add-on motor assembly 20 comprises at least one electric motor 22, a displaceable contact means 15 including a current collector, and a displacing mechanism 16. Optionally, the add-on motor assembly 20 may also comprise one or more batteries 13 and a charger 14. The add-on motor assembly 20 is configured to be releasably attached to the vehicle 1, either externally, e.g. at the rear end of or underneath the vehicle 1, or internally, e.g. under the bonnet or hood of the vehicle 1. However, any location on or in the vehicle 1, from which the contact means 15 may be brought into contact with the conducting rail 2, is deemed suitable.

The at least one electric motor 22 may be implemented as one or more wheel hub motors 22 incorporated into the hub of at least one wheel of the vehicle 1 in order to drive the at least one wheel directly. Wheel hub motors are known in the art and will not be further described here. Preferably, two wheel hub motors 22 are used, both on the same axle on opposite sides of the vehicle 1.

In the case of the vehicle being a truck pulling a trailer, the add-on motor assembly 20 could be attached or mounted to either the truck or the trailer, and one or more wheel hub motors 22 could be mounted to drive one or more wheels of the truck or one or more wheels of the trailer, or a combination of both.

The add-on motor assembly 10; 20 may further comprise a controller or control device (not shown) configured to control the at least one electric motor 12 and thereby control or regulate the propulsion provided to the vehicle. Primarily, the controller is envisioned to be manually operated by the driver, but it is also contemplated to include a cruise control function to automatically control the at least one electric motor 12 of the add-on motor assembly 10; 20 and provide a constant propulsion or velocity set by the driver.

The controller is mounted adjacent to the instrument panel of the vehicle 1 within reach of the driver to allow the driver to control the add-on motor assembly 10; 20 and the at least one electric motor 12. The controller may comprise a manual actuation device in the shape of a foot pedal, a rotatable knob, one or more buttons, a lever or handle which facilitates operation and control of the add-on motor assembly to regulate the propulsion and thereby the velocity of the vehicle. A display or screen may be provided on the controller to enable the driver to monitor operating conditions of the add-on motor assembly 10; 20 and also include means for input by the driver to control the at least one electric motor 12 of the add-on motor assembly 10; 20. The controller is configured to communicate with the motor drive system of the add-on motor assembly 10; 20 over a wire or wireless connection, as is known in the art.

## Claims

1. An add-on motor assembly (20) adapted to be connected to an existing internal combustion engine vehicle (1) and configured to propel the vehicle (1), the add-on motor assembly (20) comprising at least one electric motor (22), **characterised in that** the at least one electric motor (12) comprises a wheel hub motor (22) adapted to be incorporated into the hub of at least one wheel of the vehicle (1) in order to drive the at least one wheel directly, and the add-on motor assembly (20) further comprises contact means (15) displaceable upwards, downwards and laterally and including a current collector, and a mechanism (16) for displacing the contact means (15), wherein the displacing mechanism (16) is attached to the add-on motor assembly (20), wherein the contact means (15) is adapted to co-act mechanically and electrically with an electric conductor (2) put under voltage and located in a road section on which the vehicle (1) is travelling, in order to supply electric voltage to the at least one wheel hub motor (22) which thereby propels the vehicle (1).

2. The add-on motor assembly (20) according to claim 1, wherein the displacing mechanism (16) comprises a longitudinal arm (17) having a first end section rotatably attached to a side of the add-on motor assembly (20) facing the road section and a second end section adapted to carry the contact means (15).

3. The add-on motor assembly (20) according to claim 1 or 2, wherein the add-on motor assembly (20) is adapted to be releasably attached to the vehicle (1).

4. The add-on motor assembly (20) according to any of the preceding claims, further comprising one or more batteries (13) and a charger (14).

5. The add-on motor assembly (20) according to any of the preceding claims, further comprising a controller configured to control the at least one wheel hub motor (22) and thereby the propulsion provided to the vehicle (1).

6. The add-on motor assembly (20) according to claim 5, wherein the controller comprises a manual actuation device configured to control the at least one wheel hub motor (22).

7. The add-on motor assembly (20) according to claim 5 or 6, wherein the controller communicates with the at least one wheel hub motor (22) over a wire or wireless connection.

8. A vehicle (1) comprising an add-on motor assembly (20) according to any of the preceding claims.

9. A method of adapting an existing internal combustion engine vehicle (1) to utilise supplied voltage from an electric conductor (2) located in a road section, on which the vehicle (1) is travelling, in order to propel the vehicle (1), **characterized by** the steps:
- connecting an add-on motor assembly (20) to the vehicle (1), the add-on motor assembly (20) being configured to propel the vehicle (1) and comprising at least one electric motor (22) in the form of a wheel hub motor (22) adapted to be incorporated into the hub of at least one wheel of the vehicle (1) in order to drive the at least one wheel directly, contact means (15) displaceable upwards, downwards and laterally and including a current collector, and a mechanism (16) for displacing the contact means (15), wherein the displacing mechanism (16) is attached to the add-on motor assembly (20); and
- displacing the contact means (15) upwards, downwards and/or laterally to bring the contact means (15) into mechanical and electrical contact with the electric conductor (2) in order to supply electric voltage to the at least one wheel hub motor (22) which thereby propels the vehicle (1).

## Patentansprüche

1. Zusatzmotorbaugruppe (20), die so ausgelegt ist, dass sie mit einem vorhandenen Verbrennungsmotorfahrzeug (1) verbunden wird und so eingerichtet ist, dass sie das Fahrzeug (1) antreibt, wobei die Zusatzmotorbaugruppe (20) mindestens einen Elektromotor (22) umfasst, **dadurch gekennzeichnet, dass** der mindestens eine Elektromotor (12) einen Radnabenmotor (22) umfasst, der so ausgelegt ist, dass er in die Nabe von mindestens einem Rad des Fahrzeugs (1) aufgenommen wird, damit er das mindestens eine Rad unmittelbar antreibt, und die Zusatzmotorbaugruppe (20) ferner ein Kontaktmittel (15) umfasst, das nach oben, nach unten und seitlich versetzbar ist und einen Stromkollektor aufweist, sowie einen Mechanismus (16) zum Versetzen des Kontaktmittels (15), wobei der Versetzungsmechanismus (16) an der Zusatzmotorbaugruppe (20) angebracht ist, wobei das Kontaktmittel (15) so ausgelegt ist, dass es mechanisch und elektrisch mit einem elektrischen Leiter (2) zusammenwirkt, der unter Spannung gesetzt ist und sich in einem Straßenabschnitt befindet, auf dem das Fahrzeug (1) fährt, damit der mindestens eine Radnabenmotor (22) mit elektrischer Spannung versorgt wird, der dadurch das Fahrzeug (1) antreibt.

2. Zusatzmotorbaugruppe (20) nach Anspruch 1, wobei der Versetzungsmechanismus (16) einen Längsarm (17) mit einem ersten Endabschnitt umfasst, der drehbar an einer Seite der Zusatzmotorbaugruppe (20) angebracht ist, die dem Straßenabschnitt zugewandt ist, und einem zweiten Endabschnitt, der so ausgelegt ist, dass er das Kontaktmittel (15) trägt.

3. Zusatzmotorbaugruppe (20) nach Anspruch 1 oder 2, wobei die Zusatzmotorbaugruppe (20) so ausgelegt ist, dass sie lösbar an dem Fahrzeug (1) angebracht wird.

4. Zusatzmotorbaugruppe (20) nach einem der vorhergehenden Ansprüche, die ferner eine oder mehrere Batterien (13) und eine Ladevorrichtung (14) umfasst.

5. Zusatzmotorbaugruppe (20) nach einem der vorhergehenden Ansprüche, die ferner eine Steuerung umfasst, die so ausgelegt ist, dass sie den mindestens einen Radnabenmotor (22) und dadurch die dem Fahrzeug (1) gelieferte Antriebskraft steuert.

6. Zusatzmotorbaugruppe (20) nach Anspruch 5, wobei die Steuerung eine Handbetätigungsvorrichtung umfasst, die so ausgelegt ist, dass sie den mindestens einen Radnabenmotor (22) steuert.

7. Zusatzmotorbaugruppe (20) nach Anspruch 5 oder 6, wobei die Steuerung mit dem mindestens einen Radnabenmotor (22) über eine drahtgebundene Verbindung oder drahtlose Verbindung kommuniziert.

8. Fahrzeug (1), das eine Zusatzmotorbaugruppe (20) nach einem der vorhergehenden Ansprüche umfasst.

9. Verfahren zum Anpassen eines vorhandenen Verbrennungsmotorfahrzeugs (1) zum Nutzen von Spannung, die von einem elektrischen Leiter (2) geliefert wird, der sich in einem Straßenabschnitt befindet, auf dem das Fahrzeug (1) fährt, damit das Fahrzeug (1) angetrieben wird,
**gekennzeichnet durch** folgende Schritte:
- Verbinden einer Zusatzmotorbaugruppe (20) mit dem Fahrzeug (1), wobei die Zusatzmotorbaugruppe (20) so ausgelegt ist, dass sie das Fahrzeug (1) antreibt, und mindestens einen Elektromotor (22) in Form eines Radnabenmotors (22) umfasst, der so ausgelegt ist, dass er in die Nabe von mindestens einem Rad des Fahrzeugs (1) aufgenommen wird, damit er das mindestens eine Rad unmittelbar antreibt, ein Kontaktmittel (15), das nach oben, nach unten und seitlich versetzbar ist und einen Stromkollektor aufweist, sowie einen Mechanismus (16) zum Versetzen des Kontaktmittels (15), wobei der Versetzungsmechanismus (16) an der Zusatzmotorbaugruppe (20) angebracht ist; und
- Versetzen des Kontaktmittels (15) nach oben, nach unten und/oder seitlich, damit das Kontaktmittel (15) mit dem elektrischen Leiter (2) mechanisch und elektrisch in Kontakt gebracht wird, damit der mindestens eine Radnabenmotor (22) mit elektrischer Spannung versorgt wird, der dadurch das Fahrzeug (1) antreibt.

## Revendications

1. Ensemble formant moteur supplémentaire (20) conçu pour être connecté à un véhicule à moteur à combustion interne existant (1) et configuré pour propulser le véhicule (1), l'ensemble formant moteur supplémentaire (20) comprenant au moins un moteur électrique (22), **caractérisé en ce que** le ou les moteurs électriques (12) comprennent un moteur de moyeu de roue (22) conçu pour être intégré dans le moyeu d'au moins une roue du véhicule (1) afin d'entraîner la ou les roues directement, et l'ensemble formant moteur supplémentaire (20) comprend en outre des moyens de contact (15) pouvant être déplacés vers le haut, vers le bas et latéralement et comprenant un collecteur de courant, et un mécanisme (16) permettant de déplacer les moyens de contact (15), le mécanisme de déplacement (16) étant fixé à l'ensemble formant moteur supplémentaire (20), les moyens de contact (15) étant conçus pour coopérer, mécaniquement et électriquement, avec un conducteur électrique (2) mis sous tension et situé dans une section de route sur laquelle avance le véhicule (1), afin de fournir une tension électrique au(x) moteur(s) de moyeu de roue (22) qui propulse(nt) ainsi le véhicule (1).

2. Ensemble formant moteur supplémentaire (20) selon la revendication 1, dans lequel le mécanisme de déplacement (16) comprend un bras longitudinal (17) comportant une première section d'extrémité fixée à rotation à un côté de l'ensemble formant moteur supplémentaire (20) faisant face à la section de route et une seconde section d'extrémité conçue pour porter les moyens de contact (15).

3. Ensemble formant moteur supplémentaire (20) selon la revendication 1 ou 2, l'ensemble formant moteur supplémentaire (20) étant conçu pour être fixé de manière libérable au véhicule (1).

4. Ensemble formant moteur supplémentaire (20) selon l'une quelconque des revendications précédentes, comprenant en outre une ou plusieurs batteries (13) et un chargeur (14).

5. Ensemble formant moteur supplémentaire (20) selon l'une quelconque des revendications précédentes, comprenant en outre un dispositif de commande configuré pour commander le ou les moteurs de moyeu de roue (22) et ainsi la propulsion imprimée au véhicule (1).

6. Ensemble formant moteur supplémentaire (20) selon la revendication 5, dans lequel le dispositif de commande comprend un dispositif d'actionnement manuel configuré pour commander le ou les moteurs de moyeu de roue (22).

7. Ensemble formant moteur supplémentaire (20) selon la revendication 5 ou 6, dans lequel le dispositif de commande communique avec le ou les moteurs de moyeu de roue (22) par une connexion filaire ou sans fil.

8. Véhicule (1) comprenant un ensemble formant moteur supplémentaire (20) selon l'une quelconque des revendications précédentes.

9. Procédé d'adaptation d'un véhicule à moteur à combustion interne existant (1) de sorte qu'il utilise une tension fournie par un conducteur électrique (2) situé dans une section de route, sur laquelle avance le véhicule (1), afin de propulser le véhicule (1), **caractérisé par** les étapes suivantes :
- connecter un ensemble formant moteur supplémentaire (20) au véhicule (1), l'ensemble formant moteur supplémentaire (20) étant configuré pour propulser le véhicule (1) et comprenant au moins un moteur électrique (22) sous la forme d'un moteur de moyeu de roue (22) conçu pour être intégré dans le moyeu d'au moins une roue du véhicule (1) afin d'entraîner la ou les roues directement, des moyens de contact (15) pouvant être déplacés vers le haut, vers le bas et latéralement et comprenant un collecteur de courant, et un mécanisme (16) permettant de déplacer les moyens de contact (15), le mécanisme de déplacement (16) étant fixé à l'ensemble formant moteur supplémentaire (20) ; et
- déplacer les moyens de contact (15) vers le haut, vers le bas et/ou latéralement de façon à amener les moyens de contact (15) en contact mécanique et électrique avec le conducteur électrique (2) afin de fournir une tension électrique au(x) moteur(s) de moyeu de roue (22) qui propulse(nt) ainsi le véhicule (1).
